# EUROPÄISCHE PATENTANMELDUNG

(11) **EP 3 030 043 A1**
(43) Veröffentlichungstag der Anmeldung: **08.06.2016**
(21) Anmeldenummer: 14196489.0
(22) Anmeldetag: 05.12.2014
(51) Int. Cl.: H05B 6/12, A47J 36/02

(54) **Induktionsgeschirr zum Warmhalten von Speisen**

(71) Anmelder: Gastros Switzerland AG, 8005 Zürich (CH)
(72) Erfinder: Peter, Manuel, 8632 Tann (CH)
(74) Vertreter: Klocke, Peter

(57) **Zusammenfassung**

Die Erfindung betrifft ein Induktionsgeschirr (1) beispielsweise in Form einer Schale zum Warmhalten von Speisen und schlägt vor, das Induktionsgeschirr (1) aus Kunststoff und doppelwandig mit einer Innenschale (3) und einer Außenschale (4) und einem zwischen Böden (2) der Schale (3, 4) einliegenden Aluminiumblech auszubilden.

## Beschreibung

Die Erfindung betrifft ein Induktionsgeschirr wie beispielsweise eine Schüssel oder eine Schale zum Warmhalten von Speisen mit den Merkmalen des Oberbegriffs des Anspruchs 1. Das erfindungsgemäße Induktionsgeschirr ist insbesondere zum Warmhalten und Bereitstellen warmer Speisen zur Selbst- oder Fremdbedienung vorgesehen. Zum Warmhalten ist eine induktive Erwärmung eines Bodens des Induktionsgeschirrs vorgesehen.

Die internationale Patentanmeldung WO 02/01 991 A1 offenbart ein Induktionsgeschirr zum Kochen, d. h. zum Erwärmen und nicht zum Warmhalten von Speisen. Das bekannte Induktionsgeschirr weist die Form einer Schale mit einem kreisförmigen Boden und einer zylindrischen Wand auf. Der Boden des bekannten Induktionsgeschirrs besteht aus einem nicht magnetischen Metall, dessen Unterseite mit einem ferromagnetischen Metallblech versehen ist. Das ferromagnetische Metallblech weist wie der Boden eine Kreisform auf und ist mit vier radialen Schlitzen versehen, deren Ränder zur Verbindung des ferromagnetischen Metallblechs mit dem Boden des Induktionsgeschirrs schräg nach oben gebogen sind. Auch ein umlaufender Rand des Metallblechs ist schräg nach oben gebogen. Zum Verbinden werden das ferromagnetische Metallblech und der nicht magnetische Metallboden des bekannten Induktionsgeschirrs zusammen gepresst, wobei sich die schräg nach oben gebogenen Ränder des Metallblechs in den Boden des Induktionsgeschirrs einformen. Auf diese Weise wird ein Schichtverbund des Bodens des Induktionsgeschirrs mit dem Metallblech erreicht, wobei das ferromagnetische Metallblech Bestandteil des Bodens des bekannten Induktionsgeschirrs ist.

Aufgabe der Erfindung ist ein Induktionsgeschirr zum Warmhalten von Speisen vorzuschlagen, das aus einem anderen Werkstoff als Metall besteht, wobei es metallene Bestandteile aufweisen kann und im Bereich eines Bodens ein induktiv erwärmbares Material aufweist.

Erfindungsgemäß gelöst wird diese Aufgabe durch die Merkmale des Anspruchs 1. Das erfindungsgemäße Induktionsgeschirr besteht aus Kunststoff, wobei es wie gesagt auch Bestandteile aus anderen Werkstoffen aufweisen kann, und ist zumindest im Bereich eines Bodens doppelwandig. Doppelwandig ist im Sinne von mindestens zwei Bodenwandungen aufweisend zu verstehen, das erfindungsgemäße Induktionsgeschirr kann also auch mehr Wandungen im Bereich des Bodens oder an anderer Stelle, insbesondere einer Wand aufweisen. Wandung ist im Sinne einer Fläche oder Schicht, im Fall der Bodenwandung einer Fläche oder Schicht des Bodens zu verstehen. Zwischen zwei Bodenwandungen weist das Induktionsgeschirr erfindungsgemäß ein elektrisch leitfähiges Flächenelement auf. Unter Flächenelement ist ein vorzugsweise ebenes Bauteil zu verstehen, dessen Durchmesser oder Länge und Breite ein Vielfaches seiner Dicke betragen. Insbesondere ist das Flächenelement eine Platte, ein Blech oder eine Folie. Das elektrisch leitfähige Flächenelement lässt sich induktiv erwärmen und erwärmt seinerseits den Boden des Induktionsgeschirrs zum Warmhalten von Speisen, die sich im Induktionsgeschirr befinden. Dabei ist das elektrisch leitfähi-ge Flächenelement Bestandteil des Bodens des Induktionsgeschirrs. Nicht ausgeschlossen ist, dass sich das elektrisch leitfähige Flächenelement außer im Boden auch in einer Wand des Induktionsgeschirrs befindet.

Die Erfindung ermöglicht eine preisgünstige Herstellung eines Induktionsgeschirrs, das mit Ausnahme des elektrisch leitfähigen Flächenelements vollständig aus Kunststoff bestehen kann. Weil Kunststoff typischerweise ein thermischer Isolator ist, ermöglicht die Erfindung eine Gestaltung des Induktionsgeschirrs so, dass sich seine Wand oder Wände durch die induktive Erwärmung des elektrisch leitfähigen Flächenelements nicht so stark erwärmen, dass sie bei Berührung Schmerz verursachen oder sogar zu Verbrennungen führen.

In bevorzugter Ausgestaltung der Erfindung ist das Induktionsgeschirr aus zwei Schalen zusammengesetzt, die aus Kunststoff bestehen und zwischen deren Böden das elektrisch leitfähige Flächenelement einliegt. Es können beide Schalen einen Boden und eine oder mehrere Wände aufweisen, so dass das Induktionsgeschirr am Boden und der oder den Wänden doppelwandig ist. Auch ist es möglich, dass eine der beiden Schalen ausschließlich oder im Wesentlichen nur als Bodenwandung ausgebildet ist, so dass das Induktionsgeschirr nur oder im Wesentlichen nur im Bereich des Bodens doppelwandig ausgebildet ist und eine oder mehrere einwandige Wände aufweist. Vorzugsweise ist der gesamte Boden des erfindungsgemäßen Induktionsgeschirrs doppelwandig, möglich ist allerdings auch, dass nur ein Bereich oder Bereiche des Bodens doppelwandig sind. Das oder auch mehrere elektrisch leitfähige Flächenelemente liegen in den doppel-wandigen Bereichen des Bodens ein.

Grundsätzlich kann das elektrisch leitfähige Flächenelement, das der induktiven Erwärmung des Bodens und ggf. von Wänden oder Wandbereichen des Induktionsgeschirrs dient, aus einem ferromagnetischen Material bestehen, wie es bei Induktions-Kochgeschirr üblich ist. Es hat sich allerdings gezeigt, dass ein nicht ferromagnetisches Material, beispielsweise Aluminium, sich durch Induktion ausreichend erwärmt zum Warmhalten von Speisen, wobei die Erwärmung nicht zum Kochen ausreicht. Eine ungewünscht starke Erwärmung, die warmzuhaltende Speisen "verkochen" würde, lässt sich dadurch ohne Leistungsregelung auch bei langem Warmhalten vermeiden. Dazu muss das Flächenelement auf eine maxi-male Leistung eines Induktionsfeldes abgestimmt werden. Deswegen besteht das Flächenelement des erfindungsgemäßen Induktionsgeschirrs vorzugsweise aus einem elektrisch leitfähigen, nicht ferromagnetischen oder nicht magnetischen Material, wozu außer nicht ferromagnetischen Metallen wie beispielsweise Aluminium, Kupfer oder Legierungen wie Messing oder viele Edelstähle, elektrisch leitfähige Kunststoffe und Graphit gehören. Die gute Wärmeleitfähigkeit verschiedener nicht ferromagnetischer Metalle wie Aluminium oder Kupfer im Vergleich mit beispielsweise ferromagnetischem Stahl hat den Vorteil einer gleichmäßigeren Wärmeverteilung im elektrisch leitfähigen Flächenelement.

Eine Ausgestaltung der Erfindung sieht ein Mehrschichtelement mit mindestens einer elektrisch leitfähigen Schicht und mindestens einer elektrisch isolierenden Schicht als elektrisch leitfähigem Flächenelement vor. Beispielsweise weist das elektrisch leitfähige Flächenelement mindestens zwei elektrisch leitfähige Schichten und zwischen je zwei elektrisch leitfähigen Schichten eine elektrisch isolierende Schicht auf. Eine andere Ausführungsmöglichkeit sind zwei oder mehr elektrisch leitfähige Schichten unmittelbar aufeinander, beispielsweise eine ferromagnetische Schicht (beispielsweise Stahlblech) auf (über) einer nicht ferromagnetischen elektrisch leitfähigen Schicht (beispielsweise Aluminiumfolie). Ein Magnetfeld durchdringt die nicht ferromagnetische elektrisch leitfähige Schicht und wird in der ferromagnetischen Schicht wie in einem Transformatorblech umgelenkt. Durch einen Schichtaufbau des elektrisch leitfähigen Flächenelements mit elektrisch leitenden- und evtl. elektrisch isolierenden Schichten lässt sich die Induktion beeinflussen um beispielsweise bei einem gegebenen magnetischen Wechselfeld die Erwärmung zu erhöhen oder zu erniedrigen.

Das erfindungsgemäße Induktionsgeschirr ist vorzugsweise rechteckig, wobei rechteckig auch quadratisch umfasst, d. h. ein Boden des Induktionsgeschirrs und vorzugsweise auch das elektrisch leitfähige Flächenelement sind rechteckig.

Eine bevorzugte Ausgestaltung der Erfindung sieht vor, dass das elektrisch leitfähige Flächenelement nach oben stehende Ränder aufweist. "Oben" bezieht sich auf eine vorgesehene Lage des Induktionsgeschirrs beim Warmhalten von Speisen, in der sich der Boden des Induktionsgeschirrs unten befindet. Die nach oben stehenden Ränder vermeiden ein Zusammendrängen magnetischer Feldlinien an Rändern des elektrisch leitfähigen Flächenelements, die sich innerhalb eines magnetischen Wechselfelds befinden. Außerdem entfernen sich die nach oben stehenden Ränder des elektrisch leitfähigen Flächenelements von einer Induktionsspule unter dem Boden des Induktionsgeschirrs, d. h. die nach oben stehenden Ränder des elektrisch leitfähigen Flächenelements ragen in Bereiche, in denen sich ein magnetisches Wechselfeld einer Induktionsspule, die sich unter dem Boden des Induktionsgeschirrs befindet, abschwächt. Beides vermeidet eine hohe magnetische Feldstärke durch Induktion an Rändern des Bodens und wirkt einem Temperaturanstieg zu Rändern des elektrisch leitfähigen Flächenelements hin entgegen. Umgekehrt ausgedrückt bewirken die nach oben stehenden Ränder des elektrisch leitfähigen Flächenelements eine gleichmäßigere Verteilung der induktiv erzeugten Erwärmung über eine Fläche des elektrisch leitfähigen Flächenelements.

Eine Weiterbildung der Erfindung sieht Aussparungen im elektrisch leitfähigen Flächenelement insbesondere in Form eines oder vorzugsweise mehrerer Schlitze vor, die mit Abstand von Rändern des elektrisch leitfähigen Flächenelements enden. Die Schlitze können gerade, gekrümmt, geknickt usw. sein. Diese Ausgestaltung der Erfindung zwingt induzierte Ströme im elektrisch leitfähigen Flächenelement zu einem Umströmen der Aussparungen, wodurch sich die Ströme lenken und Stromwege verlängern und eine Erwärmung des elektrisch leitfähigen Flächenelements besser auf dessen Fläche verteilen lassen. Die mit Abstand von den Rändern des elektrisch leitfähigen Flächenelements endenden Schlitze erzwingen einen induzierten Strom in Randbereiche des elektrisch leitfähigen Flächenelements, so dass auch die Randbereiche des elektrisch leitfähigen Flächenelements erwärmt werden, wenn sie sich außerhalb eines magnetischen Wechselfelds oder jedenfalls in einem Bereich schwacher Feldstärke des magnetischen Wechselfelds befinden.

Bevorzugte Weiterbildungen der Erfindung sehen vor, dass die Schlitze im elektrisch leitfähigen Flächenelement parallel zueinander und/oder parallel zu Rändern des elektrisch leitfähigen Flächenelements und/oder in einer Linie befinden. Letzteres bedeutet, dass sich Schlitze auf einer gedachten Geraden oder auch gekrümmten oder geknickten Linie befinden.

Eine bevorzugte Ausgestaltung der Erfindung sieht Abstandshalter zwischen Wandungen des doppel- oder mehrwandigen Induktionsgeschirrs vor. Solche Abstandshalter können beispielsweise Zapfen- oder Rippen sein, die Abstandshalter können an einer oder mehreren Wänden und/oder am Boden des Induktionsgeschirrs vorgesehen sein. Die Abstandshalter wirken einer Erwärmung einer Außenseite einer Wand oder von Wänden des Induktionsgeschirrs durch warme, im Induktionsgeschirr befindliche Speisen entgegen. Sofern im Boden des Induktionsgeschirrs Abstandshalter vorgesehen sind, befinden sie sich unter dem elektrisch leitfähigen Flächenelement, so dass das elektrisch leitfähige Flächenelement an einer Unterseite einer oberen Bodenwandung anliegt um Wärme gut vom elektrisch leitfähigen Flächenelement durch die obere Bodenwandung in Speisen im Induktionsgeschirr zu übertragen. Ein durch die Abstandhalter bewirkter Abstand zwischen dem elektrisch leitfähigen Flächenelement und einer unteren Bodenwandung wirkt einem Erwärmen der unteren Bodenwandung entgegen, wodurch sich eine verhältnismäßig kalte untere Bodenwandung trotz induktiver Erwärmung erreichen lässt. "Oben" und "unten" beziehen sich wie oben geschrieben auf eine vorgesehene Lage bei Benutzung des Induktionsgeschirrs zum Warmhalten von Speisen, in der sich der Boden des Induktionsgeschirrs unten befindet.

Eine erfindungsgemäße Kombination des Induktionsgeschirrs mit den Merkmalen des Anspruchs 9 sieht ein Induktionsgeschirr der vorstehend erläuterten Art und ein Induktionswärmfeld mit einer Induktionsspule, auf das das Induktionsgeschirr stellbar ist, vor. Das elektrisch leitfähige Flächenelement des Induktionsgeschirrs weist einen oder mehrere Schlitze auf, deren voneinander entfernte Enden einen größeren Abstand voneinander aufweisen als ein Durchmesser der Induktionsspule. Dadurch wird sichergestellt, dass unabhängig davon, wie weit das elektrisch leitfähige Flächenelement die Induktionsspule überdeckt, zumindest an einem Ende eines Schlitzes induzierte elektrische Ströme im elektrisch leitfähigen Flächenelement um das Ende des Schlitzes herum verlaufen. Das stellt eine Erwärmung bis in Randbereiche des elektrisch leitfähigen Flächenelements sicher und bewirkt eine gleichmäßigere Verteilung der induktiv erzeugten Wärme über die Fläche des elektrisch leitfähigen Flächenelements. In Anlehnung an ein Induktionskochfeld ist hier die Bezeichnung Induktionswärmfeld gewählt worden, weil anders als beim Kochen nicht kalte Speisen erwärmt sondern warme Speisen warm gehalten werden sollen.

Eine Weiterbildung der Erfindung sieht vor, dass das Induktionswärmfeld mehrere Induktionsspulen aufweist. Hier sieht eine Ausgestaltung der Erfindung vor, dass voneinander entfernte Enden eines oder verschiedener Schlitze im elektrisch leitfähigen Flächenelement einen größeren Abstand voneinander aufweisen als voneinander entferne Stellen der Induktionsspulen des Induktionswärmfelds.

Vorzugsweise sind die Schlitze im elektrisch leitfähigen Flächenelement mindestens so lang wie ein Innendurchmesser einer Induktionsspulen eines Induktionswärmfelds. Das bewirkt, dass sich mindestens ein Ende eines Schlitzes auf oder außerhalb der Induktionsspule befindet.

Die Erfindung wird nachfolgend anhand in der Zeichnung dargestellter Ausführungsbeispiele näher erläutert. Die drei Figuren zeigen drei Ausführungsbeispiele erfindungsgemäßer Induktionsgeschirre in perspektivischen Explosionsdarstellungen.

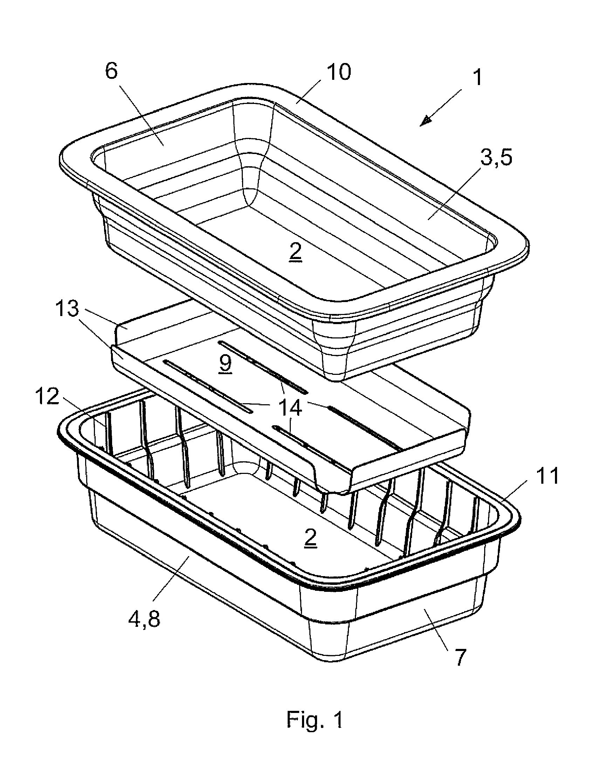

Figur 1 zeigt ein Induktionsgeschirr 1 zum Warmhalten von Speisen in Form einer Schale mit rechteckigem Boden 2. Das Induktionsgeschirr 1 weist zwei Schalen 3, 4 mit jeweils eigenem Boden 2 und Seitenwänden 5, 6, 7, 8 sowie ein dünnes Aluminiumblech als elektrisch leitfähiges und nicht ferromagnetisches Flächenelement 9 auf. Die Schalen 3, 4 bestehen aus einem thermisch isolierenden Kunststoff. Sie weisen entlang oberer, d. h. dem Boden 2 ferner Ränder einen entsprechend der Rechteckform des Induktionsgeschirrs 1 rechteckringförmigen, nach außen abstehenden Flansch 10, 11 auf. An Innenseiten der Seitenwände 7, 8 weist eine untere bzw. äußere der Schalen 4 nach innen stehende Rippen als Abstandshalter 12 auf. Als elektrisch leitfähiges Flächenelement 9 kann das Induktionsgeschirr 1 auch ein Mehrschichtelement, beispielsweise ein Schichtverbundelement mit mehreren elektrisch leitfähigen Schichten und elektrisch isolierenden Schichten zwischen den elektrisch leitfähigen Schichten aufweisen (nicht dargestellt). Die Schichten können aus verschiedenen Werkstoffen bestehen, beispielsweise kann das elektrisch leitfähige Flächenelement 9 eine Schicht aus einem ferromagnetischen Werkstoff und eine andere Schicht aus einem nicht ferromagnetischen elektrisch leitfähigen Werkstoff aufweisen. Auch ist es beispielsweise möglich, eine ferromagnetische Schicht unmittelbar auf einer nicht ferromagnetischen elektrisch leitfähigen Schicht anzuordnen, wobei die ferromagnetische Schicht oben angeordnet ist.

Das elektrisch leitfähige Flächenelement 9 hat Form und Größe des Bodens 2 einer oberen bzw. inneren der beiden Schalen 3, die nachfolgend auch als Innenschale 3 bezeichnet wird. Ränder 13 des elektrisch leitfähigen Flächenelements 9 stehen nach oben, wobei im Ausführungsbeispiel die Ränder 13 nicht durchgehend umlaufend sondern an Ecken des elektrisch leitfähigen Flächenelements 9 unterbrochen sind. Das elektrisch leitfähige Flächenelement 9 ist passgenau von unten an den Boden 2 der Innenschale 3 ansetzbar so dass seine nach oben stehenden Ränder 13 an unteren Bereichen der Wände 5, 6 der Innenschale 3 anliegen. Außerdem ist das elektrisch leitfähige Flächenelement 9 mit Schlitzen 14 versehen.

Die beiden Schalen 3, 4 werden ineinander gesetzt, so dass ihre Flansche 10, 11 aufeinander liegen und stoffschlüssig miteinander verbunden, beispielsweise verklebt oder verschweißt werden. Das Induktionsgefäß 1 ist dadurch im Bereich seiner Wände 5, 6, 7, 8 und der Böden 2 doppelwandig. Die Böden 2 der Schalen 3, 4 können auch als Bodenwandungen des doppelwandigen Bodens des Induktionsgeschirrs 1 aufgefasst werden. Vor oder beim Zusammensetzen der Schalen 3, 4 wird das elektrisch leitfähige Flächenelement 9 zwischen den Böden 2 der Schalen 3, 4 angeordnet, so das sich bei zusammengesetzten Schalen 3, 4 das elektrisch leitfähige Element 9 zwischen den Böden 2 der Schalen 3, 4 und die nach oben stehenden Ränder 13 des elektrisch leitfähigen Flächenelements zwischen Wänden 5, 6 7, 8 der Schalen 3, 4 befinden.

Mit einem magnetischen Wechselfeld lassen sich durch Induktion Wirbelströme in dem elektrisch leitfähigen Flächenelement 9 erzeugen, die das elektrisch leitfähige Flächenelement 9 durch elektrischen Widerstand erwärmen. Die induktive Erwärmung eines nicht ferromagnetischen, elektrisch leitfähigen Flächenelements 9, im Ausführungsbeispiel einem Aluminiumblech mit einer Dicke von 0,4 mm, reicht zum Warmhalten von Speisen aus, erwärmt sie aber nicht auf über etwa 50°C bis 70°C. Durch ein nicht ferromagnetisches, elektrisch leitfähiges Flächenelement 9 lässt sich das erfindungsgemäße Induktionsgeschirr 1 auf einem nicht leistungsgeregelten Induktionskoch- bzw. -wärmfeld verwenden.

Das elektrisch leitfähige Flächenelement 9 liegt an den Böden 2 der Schalen 3, 4 an und erwärmt die Böden 2, so dass sich warme Speisen im Induktionsgeschirr warmhalten lassen. Die die Abstandshalter 12 bildenden Rippen innen an den Innenseiten der Wände 7, 8 der Außenschale 4 halten die Wände 5, 6, 7, 8 der Schalen 3, 4 in einem Abstand voneinander und die nach oben stehenden Ränder 13 des elektrisch leitfähigen Flächenelements 9 in Abstand von den Wänden 7, 8 der Außenschale 4. Dadurch wird vermieden, dass sich die Wände 7, 8 der Außenschale 4 von warmen und warmgehaltenen Speisen im Induktionsgeschirr 1 wesentlich erwärmen, die Wände 7, 8 der Außenschale 4 erwärmen sich kaum merklich und keinesfalls so stark, dass eine Berührung schmerzhaft wäre oder sogar Verbrennungen verursachen könnte. Denkbar sind auch Abstandshalter auf dem Boden 2 der Außenschale 4, so dass das elektrisch leitfähige Flächenelement 9 unverändert unten am Boden 2 der Innenschale einliegt und mit Abstand über dem Boden 2 der Außenschale 4 gehalten ist. Dadurch ließe sich auch eine Erwärmung des Bodens 2 der Außenschale 4, also einer unteren Bodenwandung des Induktionsgeschirrs 1, gering halten. Im Ausführungsbeispiel ist allerdings eine Variante gewählt, bei der der Boden 2 der Außenschale 4 keine Abstandshalter für das elektrisch leitfähige Flächenelement 9 aufweist und das elektrisch leitfähige Flächenelement 9 sowohl unten Boden 2 der Innenschale 3 als auch auf dem Boden 2 der Außenschale 4 anliegt.

Das elektrisch leitfähige Flächenelement 9 weist vier Schlitze 14 auf, von denen jeweils zwei parallel zueinander und zwei auf geraden Linien hintereinander angeordnet sind. Die Schlitze 14 verlaufen parallel zu Längsseiten und enden mit Abstand von Querseiten des elektrisch leitfähigen Flächenelements 9. In einer Querrichtung weisen die Schlitze 14 einen ungefähr doppelt so großen Abstand voneinander wie von den Längsseiten des elektrisch leitfähigen Flächenelements 9 auf, wobei hier ein ebener rechteckiger Bereich des elektrisch leitfähigen Flächenelements 9 gemeint ist, der dort endet, wo die nach oben stehenden Ränder 13 die Ebene des Flächenelements 9 verlassen.

Zum induktiven Erwärmen des elektrisch leitfähigen Flächenelements 9 und damit des Bodens 2 des Induktionsgeschirrs 1 wird das Induktionsgeschirr 1 mit seinem Boden 2 auf ein nicht dargestelltes Induktionswärmfeld gestellt, das eine oder mehrere Induktionsspulen aufweist und wie ein Induktionskochfeld ausgebildet ist. Voneinander entferne Enden der Schlitze 14 im elektrisch leitfähigen Flächenelement 9 weisen einen größeren Abstand voneinander auf als ein Durchmesser einer Induktionsspule des nicht dargestellten Induktionswärmfeldes. Mit voneinander entfernten Enden der Schlitze 14 sind einander ferne Enden zweier in gerader Linie angeordneter Schlitze 14 gemeint. Die Schlitze 14 stellen sicher, dass induzierte Wirbelströme um die Enden der Schlitze 14 herumfließen müssen und bewirken dadurch eine Erwärmung des elektrisch leitfähigen Flächenelements 9 bis in seine Randbereiche und eine gleichmäßigere Erwärmung der gesamten Fläche des elektrisch leitfähigen Flächenelements 9 als es ohne die Schlitze 14 der Fall wäre.

Die Schlitze 14 im elektrisch leitfähigen Flächenelement 9 sind mindestens so lang wie ein Innendurchmesser der Induktionsspule des nicht dargestellten Induktionswärmfeldes.

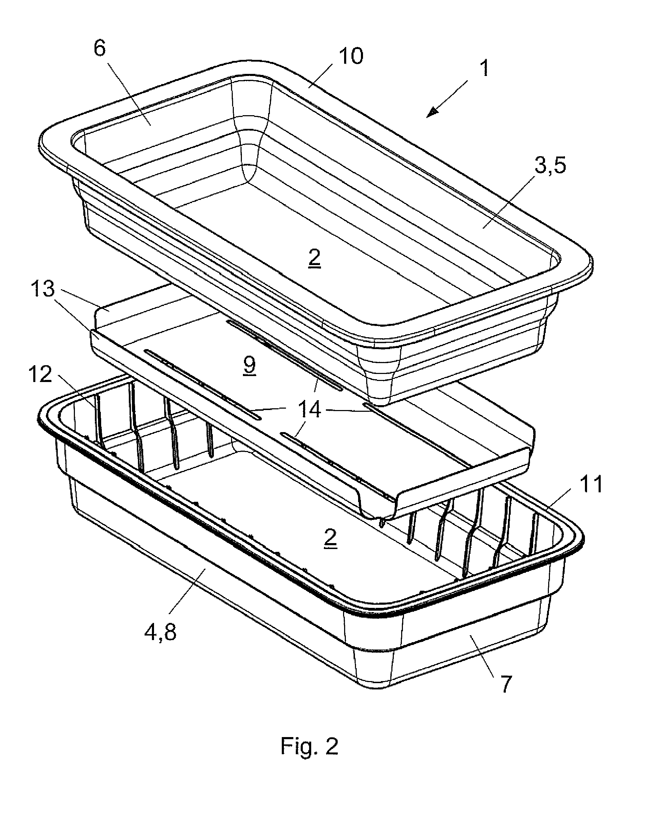

Das erfindungsgemäße Induktionsgeschirr 1 aus Figur 2 unterscheidet sich von dem vorstehend erläuterten Induktionsgeschirr aus Figur 1 dadurch, dass es nahezu gleich breit und etwa 20% länger ist. Die vier Schlitze 14 im elektrisch leitfähigen Flächenelement 9 enden ebenfalls mit Abstand von den Querseiten des elektrisch leitfähigen Flächenelements 9 und sind mit Abstand von und parallel zu den Längsseiten des elektrisch leitfähigen Flächenelements 9 angeordnet. Im Übrigen stimmen die Induktionsgefäße 1 in Figuren 1 und 2 überein und es wird zur Vermeidung von Wiederholungen zur Erläuterung der Figur 2 auf die Erläuterungen der Figur 1 verwiesen. In beiden Figuren werden übereinstimmende Bezugszahlen verwendet.

Das Induktionsgeschirr 1 aus Figur 2 ist zum Erwärmen auf einem nicht gezeichneten Induktionswärmfeld mit einer oder zwei Induktionsspulen vorgesehen. Das Induktionswärmfeld kann auch mehr als zwei Induktionsspulen aufweisen, wobei eine Positionierung des Induktionsgeschirrs 1 so vorgesehen ist, dass eine oder zwei der Induktionsspulen für die induktive Erwärmung des elektrisch leitfähigen Flächenelements 9 wirksam sind.

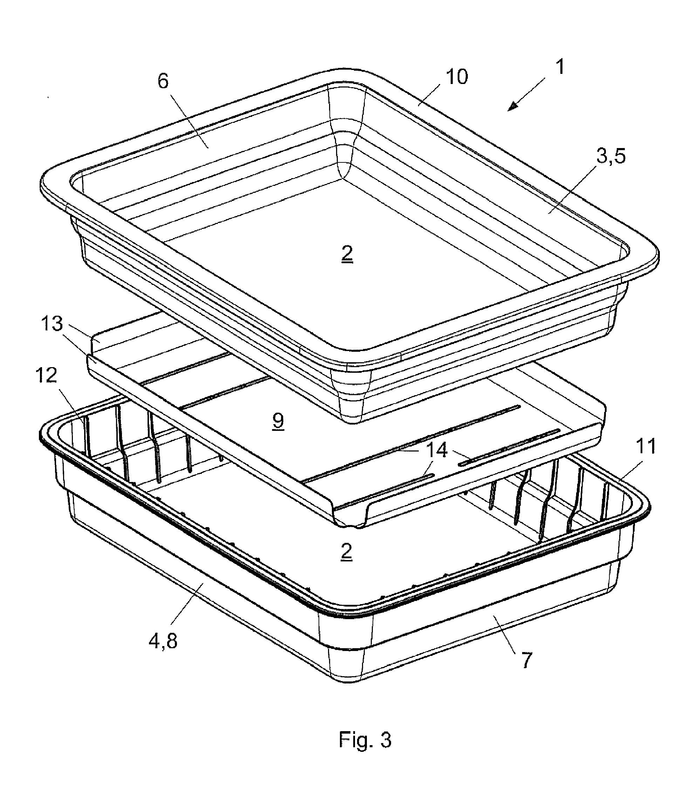

Das in Figur 3 gezeigte erfindungsgemäße Induktionsgeschirr 1 unterscheidet sich von dem Induktionsgeschirr 1 aus Figur 2 dadurch, dass es ungefähr so breit wie das Induktionsgeschirr 1 aus Figur 2 lang und ungefähr 2/3 länger als breit ist durch ein geändertes Schlitzbild im elektrisch leitfähigen Flächenelement 9. Das elektrisch leitfähige Flächenelement 9 weist in Figur 3 sechs Schlitze 14 auf, die parallel zueinander und im Unterschied zu Figuren 1 und 2 parallel zu den Querseiten des elektrisch leitfähigen Flächenelements 9 sind. Ebenso wie die Schlitze 14 in Figuren 1 und 2 mit Abstand von den Querseiten des elektrisch leitfähigen Flächenelements 9 enden die Spitze 14 in Figur 3 mit demselben Abstand von den Längsseiten des elektrisch leitfähigen Flächenelement 9. Es sind in Figur 3 jeweils zwei Schlitze 14 in gerader Linie mit demselben Abstand von den Querseiten des elektrisch leitfähigen Flächenelements 9 angeordnet wie der Abstand der Schlitze 14 von den Längsseiten der elektrisch leitfähigen Flächenelemente 9 in Figuren 1 und 2. Mit ungefähr dem doppelten Abstand von den beiden in gerader Linie angeordneten Schlitzen 14 wie der Abstand der beiden Schlitze 14 von den Querseiten des elektrisch leitfähigen Flächenelements 9 weist das elektrisch leitfähige Flächenelement 9 in Figur 3 jeweils einen weiteren, durchgehenden Schlitz 14 auf, der wie bereits geschrieben mit demselben Abstand von den Längsseiten des elektrisch leitfähigen Flächenelements 9 endet wie die beiden in gerader Linie angeordneten Schlitze 14. Zwischen den beiden langen Schlitzen 14 weist das elektrisch leitfähige Flächenelement 9 in Figur 3 eine große Fläche ohne Aussparungen auf, die ungefähr 1/2 der gesamten ebenen Fläche des elektrisch leitfähigen Flächenelements 9 ohne die nach oben stehenden Ränder 13 einnimmt. Das Induktionsgeschirr 1 aus Figur 3 ist zum Erwärmen mit einem nicht gezeichneten Induktionswärmefeld vorgesehen, das zwei Induktionsspulen aufweist. Das Induktionsgeschirr 1 wird so auf das Induktionswärmfeld gestellt, dass sich jeweils zwei auf einer geraden Linie befindliche Schlitze 14 und ein benachbarter quer durchgehender langer Schlitz 14 über einer Induktionsspule befinden. Ein Abstand der Induktionsspulen ist so groß, dass einander ferne Stellen der Induktionsspulen sich außerhalb der den Querseiten des elektrisch leitfähigen Flächenelements 9 nahen Schlitze 14 befinden. Einander ferne Enden der Schlitze 14 weisen auch hier einen größeren Abstand voneinander auf als der Durchmesser der Induktionsspulen.

## Patentansprüche

1. Induktionsgeschirr zum Warmhalten von Speisen, mit einem Boden (2), der ein elektrisch leitfähiges Flächenelement (9) aufweist, **dadurch gekennzeichnet, dass** das Induktionsgeschirr (1) aus Kunststoff besteht, zumindest im Bereich des elektrisch leitfähigen Flächenelements (9) doppelwandig ist und das elektrisch leitfähige Flächenelement (9) zwischen zwei Bodenwandungen einliegt.

2. Induktionsgeschirr nach Anspruch 1, **dadurch gekennzeichnet, dass** das Induktionsgeschirr (1) aus zwei Schalen (3, 4) zusammengesetzt ist, die aus Kunststoff bestehen und zwischen deren Böden (2) das elektrisch leitfähige Flächenelement (9) einliegt.

3. Induktionsgeschirr nach Anspruch 1 oder 2, **dadurch gekennzeichnet, dass** das elektrisch leitfähige Flächenelement (9) nicht ferromagnetisch ist.

4. Induktionsgeschirr nach einem der Ansprüche 1 bis 3, **dadurch gekennzeichnet, dass** das elektrisch leitfähige Flächenelement (9) ein Mehrschichtelement mit mindestens einer elektrisch leitfähigen Schicht und mindestens einer weiteren elektrisch leitfähigen- oder elektrisch isolierenden Schicht ist.

5. Induktionsgeschirr nach einem der Ansprüche 1 bis 4, **dadurch gekennzeichnet, dass** der Boden (2) des Induktionsgeschirrs (1) und/oder das elektrisch leitfähige Flächenelement (9) rechteckig sind.

6. Induktionsgeschirr nach einem der Ansprüche 1 bis 5, **dadurch gekennzeichnet, dass** das elektrisch leitfähige Flächenelement (9) nach oben stehende Ränder (13) aufweist.

7. Induktionsgeschirr nach einem der Ansprüche 1 bis 6, **dadurch gekennzeichnet, dass** das elektrisch leitfähige Flächenelement (9) Aussparungen aufweist.

8. Induktionsgeschirr nach einem der Ansprüche 1 bis 7, **dadurch gekennzeichnet, dass** das elektrisch leitfähige Flächenelement (9) Schlitze (14) aufweist, die mit Abstand von Seiten des elektrisch leitfähigen Flächenelements (9) enden.

9. Induktionsgeschirr nach Anspruch 8, **dadurch gekennzeichnet, dass** das elektrisch leitfähige Flächenelement (9) Schlitze (14) parallel zueinander und/oder parallel zu Seiten des elektrisch leitfähigen Flächenelements (9) und/oder in einer Linie aufweist.

10. Induktionsgeschirr nach einem der vorhergehenden Ansprüche, **dadurch gekennzeichnet, dass** das Induktionsgeschirr (1) Abstandshalter (12) zwischen seinen Wandungen aufweist.

11. Kombination eines Induktionsgeschirrs nach Anspruch 8 oder 9 mit einem Induktionswärmfeld, das eine Induktionsspule aufweist, **dadurch gekennzeichnet, dass** ein Abstand voneinander entfernter Enden des oder der Schlitze (14) im elektrisch leitfähigen Flächenelement (9) größer als ein Durchmesser der Induktionsspule ist.

12. Kombination nach Anspruch 11, **dadurch gekennzeichnet, dass** das Induktionswärmfeld mehrere Induktionsspulen aufweist und dass ein Abstand voneinander entfernter Schlitze (14) im elektrisch leitfähigen Flächenelement (9) größer als ein Durchmesser der Induktionsspulen ist.

13. Kombination nach Anspruch 11 oder 12, **dadurch gekennzeichnet, dass** die Schlitze (14) mindestens so lang sind wie ein Innendurchmesser der Induktionsspule.
